(19) Europäisches Patentamt
European Patent Office
Office européen des brevets

(11) **EP 3 651 466 A1**

(12) **DEMANDE DE BREVET EUROPEEN**

(43) Date de publication:
**13.05.2020 Bulletin 2020/20**

(51) Int Cl.:
*H04N 19/52* (2014.01)    *H04N 19/593* (2014.01)

(21) Numéro de dépôt: **19215772.5**

(22) Date de dépôt: **25.06.2010**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **03.07.2009  FR 0954624**

(62) Numéro(s) de document de la (des) demande(s) initiale(s) en application de l'article 76 CBE:
**10745326.8 / 2 449 784**

(71) Demandeur: **ORANGE**
**75015 Paris (FR)**

(72) Inventeurs:
• JUNG, Joël
  92326 Châtillon Cedex (FR)
• LAROCHE, Guillaume
  92326 Châtillon Cedex (FR)
• THIESSE, Jean-Marc
  92326 Châtillon Cedex (FR)

Remarques:
Cette demande a été déposée le 12.12.2019 comme demande divisionnaire de la demande mentionnée sous le code INID 62.

(54) **PRÉDICTION D'UN VECTEUR MOUVEMENT D'UNE PARTITION D'IMAGE COURANTE DE FORME GÉOMETRIQUE OU DE TAILLE DIFFÉRENTE DE CELLE D'AU MOINS UNE PARTITION D'IMAGE DE RÉFÉRENCE VOISINE, CODAGE ET DECODAGE UTILISANT UNE TELLE PREDICTION**

(57)    L'invention concerne un procédé de prédiction d'un vecteur mouvement (MVp1) d'une partition (P1) d'une image courante ($I_N$), à partir d'une pluralité de n vecteurs mouvement de référence associés respectivement à n partitions de référence qui ont été préalablement codées puis décodées.

S'agissant d'une prédiction spatiale d'un tel vecteur, dans le cas où la forme géométrique/taille de la partition courante est différente de celle de k partitions de référence voisines, avec k≤n, le vecteur mouvement de la partition d'image courante est déterminé à partir d'une fonction d'au moins un vecteur mouvement de référence qui appartient à un ensemble de k vecteurs mouvement de référence associés respectivement aux k partitions de référence voisines.

Fig. 4B

EP 3 651 466 A1

**Description**

Arrière-plan de l'invention

La présente invention se rapporte de manière générale au domaine du traitement d'images, et plus précisément au codage et au décodage par compétition d'images numériques et de séquences d'images numériques.

Plusieurs procédés de codage et de décodage existent pour la transmission d'images. On distingue notamment des grands types de codage tels que le codage dit "intra" où une image est codée de manière autonome, c'est-à-dire sans référence à d'autres images, ou encore le codage dit "inter" qui consiste à coder une image courante par rapport à des images passées de manière à exprimer et ne transmettre que la différence entre ces images.

Les procédés de codage du type précité comprennent généralement une étape de codage prédictif selon laquelle des portions d'images, appelés blocs ou macroblocs, d'une image courante sont prédits par rapport à d'autres blocs ou macroblocs de référence, c'est-à-dire précédemment codés puis décodés.

Dans le cas par exemple de la norme H264/MPEG-4 AVC (d'après l'anglais "Advanced Video Coding"), le codage prédictif d'un macrobloc consiste à découper les macroblocs selon une pluralité de partitions ayant généralement la forme de blocs de plus petite taille.

Plus précisément dans le cas du codage inter conforme à la norme précitée, le macrobloc courant à coder peut être partitionné selon les modes 16x16, 8x16, 16x8 et 8x8. Si le mode 8x8 est sélectionné, chaque bloc 8x8 est à nouveau partitionné selon les modes 8x8, 4x8, 8x4 et 4x4. Chaque bloc courant est comparé à un ou plusieurs blocs respectivement d'une ou de plusieurs images de référence. On obtient alors un vecteur mouvement qui décrit le mouvement entre le bloc courant et le bloc de référence ayant la même position que le macrobloc courant dans l'image précédente. Un prédicteur de ce vecteur mouvement est alors calculé afin de coder le résiduel entre le vecteur mouvement précité et le vecteur mouvement prédicteur calculé.

Une telle prédiction du vecteur mouvement n'est pas adaptée à tous les types de partitionnement.

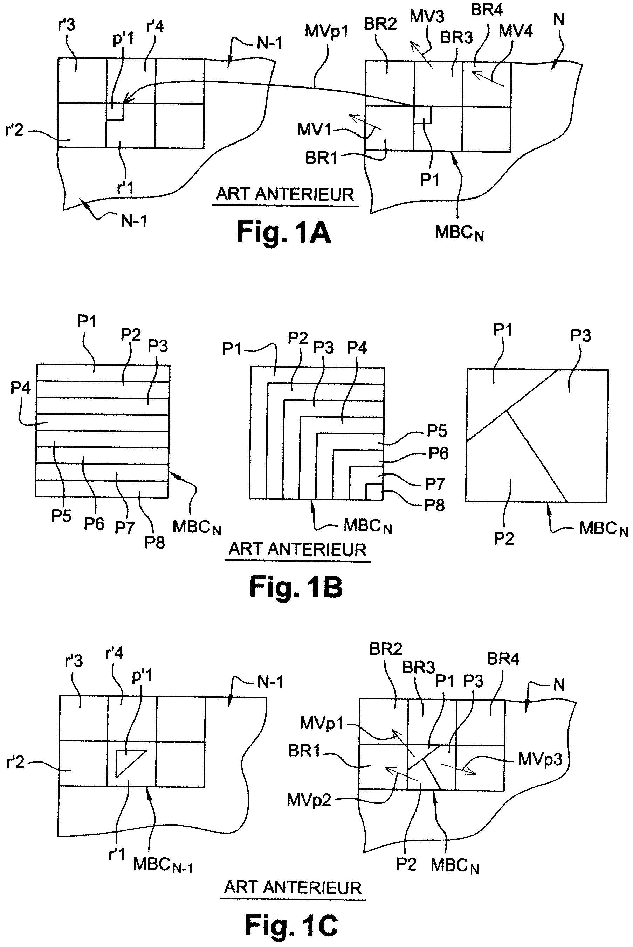

La figure 1A représente par exemple le cas d'une prédiction temporelle d'un vecteur mouvement MVp1 d'une partition P1 d'un macrobloc courant à coder, noté $MBC_N$, qui appartient à une image N à coder conformément à la norme précitée. Dans l'exemple représenté, un tel macrobloc $MBC_N$ est de forme carrée classique. La partition P1, de taille plus petite que celle du macrobloc courant $MBC_N$, a également une forme carrée. La partition P1 est par ailleurs entourée par d'autres macroblocs BR1, BR2, BR3, BR4 qui sont situés au voisinage proche de cette dernière et qui, dans l'exemple représenté, ont la même forme et taille que celles du macrobloc $MBC_N$.

Dans l'exemple représenté, le vecteur mouvement MVp1 pointe sur une zone p'1 d'une image de référence, notée N-1, qui est par exemple l'image immédiatement précédente. La zone d'image de référence p'1 a la même position que la partition p1 du macrobloc courant $MBC_N$ dans l'image précédente N-1 et est voisine d'une pluralité de partitions de référence r'1, r'2, r'3 et r'4.

En application de la norme H264/AVC, le vecteur mouvement MVp1 précité est prédit uniquement spatialement. Plus précisément, il est procédé au calcul d'un vecteur mouvement de référence qui est égal à un médian des vecteurs mouvement MV1, MV3, MV4 associés respectivement aux macroblocs de référence BR1, BR3 et BR4.

Par ailleurs, on voit depuis peu apparaître de nouveaux types de partitionnement du macrobloc courant à coder qui n'avaient pas été prévus dans la norme H264/AVC. Ainsi, comme représenté à la figure 1B, un macrobloc courant à coder $MBC_N$ peut être découpé en plusieurs partitions P1 à Pp de forme linéaire, en forme de L, ou bien de forme tout à fait arbitraire.

La norme H264/AVC ne prévoit pas de prédiction de vecteur mouvement qui soit adaptée aux différents types de partitionnement de la figure 1B et au cas particulier où la zone d'image de référence pointée par ce vecteur a une forme géométrique ou une taille différente respectivement de la forme géométrique ou bien de la taille d'au moins une partition de référence voisine.

Une telle situation est représentée sur la figure 1C qui illustre le cas d'une prédiction de plusieurs vecteurs mouvement MVp1, MVp2, MVp3 associés respectivement à trois partitions P1, P2, P3 d'un macrobloc courant à coder $MBC_N$ appartenant à une image N à coder conformément à la norme précitée. Dans l'exemple représenté, les partitions P1, P2 et P3 du macrobloc $MBC_N$ sont de forme géométrique quelconque.

Dans l'exemple représenté, le vecteur mouvement de la première partition P1 du macrobloc courant $MBC_N$, noté MVp1, pointe sur une zone d'image de référence p'1 d'un macrobloc de référence $MBC_{N-1}$ d'une image de référence N-1 ayant la même position que le macrobloc courant $MBC_N$ dans l'image précédente N-1. Une partition de référence r'1, voisine de la zone d'image de référence p'1, a une forme géométrique très différente de celle de la zone d'image de référence p'1 et la norme H264/AVC ne propose pas une méthode de calcul spécifique à un tel cas de figure.

En application de la norme H264/AVC, pour prédire par exemple le vecteur mouvement Mvp1, il est procédé, comme dans le cas de la figure 1A, au calcul d'un vecteur mouvement de référence qui est généralement égal à un médian spatial des vecteurs mouvement MV1, M3, MV4, associés respectivement aux macroblocs de référence BR1, BR3, BR4 de l'image courante N.

Une telle prédiction spatiale du vecteur mouvement peut s'avérer manquer de précision compte tenu du fait que dans l'image N-1, il existe une différence de forme et de taille entre la zone d'image de référence p'1 et les partitions de référence r'1, r'2, r'3, r'4.

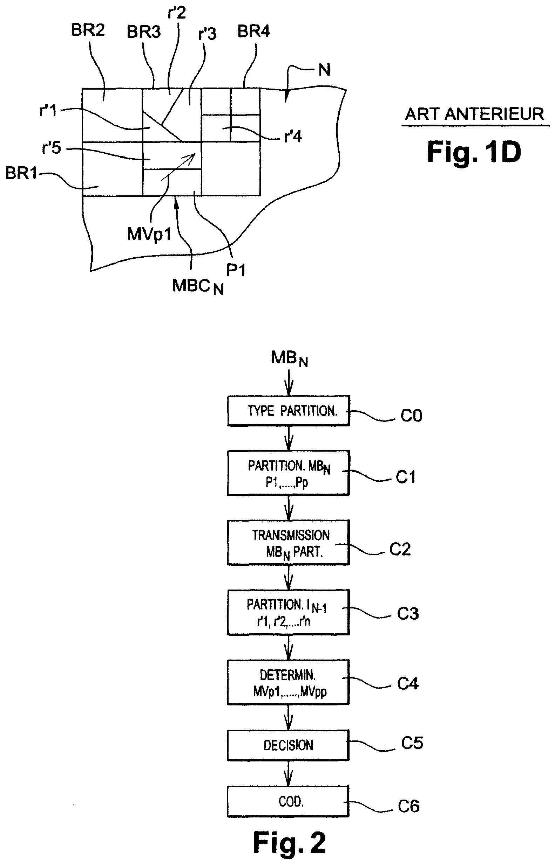

La figure 1D représente par exemple le cas d'une prédiction spatiale d'un vecteur mouvement MVp1 d'une partition P1 d'un macrobloc courant à coder, noté $MBC_N$, qui appartient à une image N à coder conformément à la norme précitée. La méthode de prédiction classique utilisée dans la norme H264/AVC consiste à calculer le vecteur mouvement MVp1 de la partition P1 en tant que médian des vecteurs mouvement de référence associés respectivement aux partitions de référence voisines de la partition P1, à savoir les partitions BR1, BR3 et BR4 sur la figure 1D.

Or, il convient de noter qu'à part la partition r'5 disposée juste au dessus de la partition P1, les autres partitions de référence BR1, BR2, de même que les sous-partitions de référence r'1, r'2, r'3 de BR3 et r'4 de BR4, ont une forme géométrique ou une taille très différente de celle de la partition P1. Ainsi, de façon analogue à la figure 1C, la méthode de prédiction classique ne sera donc pas adaptée au partitionnement particulier illustré sur la figure 1D. En effet, une telle méthode n'impose pas de règles de sélection des partitions de référence les plus adaptées en terme de forme géométrique ou de taille, et donc des vecteurs mouvement de référence correspondants pour la prédiction de MVp1.

On connaît par ailleurs d'autres méthodes de calcul du vecteur mouvement de référence en vue de coder en Inter les partitions d'un macrobloc courant.

L'une d'entre elles est décrite dans la publication IEEE Transactions on Circuits and System for Vidéo Technology, Vol. 18, 1247-1257 (Sept.2008), de G Laroche, J. Jung, et B. Pesquet-Popescu et concerne les cas où, comme dans la norme H264/AVC, les macroblocs sont découpés selon une pluralité de partitions ayant généralement la forme de blocs de plus petite taille. Selon cette méthode, on prédit le vecteur mouvement d'un macrobloc d'une image courante par rapport à un vecteur mouvement de référence qui est choisi comme étant le vecteur pointant sur le pixel situé en haut et le plus à gauche du macrobloc ayant la même position que le macrobloc courant dans une image précédente.

Si l'on tente d'appliquer cette dernière méthode à la prédiction du vecteur MVp1 de la figure 1A ou à celle du vecteur MVp1 de la figure 1C:

- le vecteur MVp1 de la figure 1A est obtenu à partir d'un vecteur mouvement de référence qui est associé à la partition de référence r'2, le pixel le plus à gauche de la partition de référence p'1 étant situé dans la partition de référence r'2;
- le vecteur MVp1 de la figure 1C est obtenu à partir d'un vecteur mouvement de référence qui est associé à la partition de référence r'1, le pixel le plus à gauche de la partition de référence p'1 étant situé dans la partition de référence r'1.

La prédiction obtenue avec cette méthode de codage n'est pas non plus adaptée aux différents types possibles de partitionnement pour les mêmes raisons que celles évoquées plus haut en liaison avec la méthode de prédiction utilisée dans la norme H264/AVC.

Objet et résumé de l'invention

Un des buts de l'invention est de remédier à des inconvénients de l'état de la technique précité.

A cet effet, selon un premier aspect, la présente invention concerne un procédé de prédiction spatiale d'un vecteur mouvement d'une partition d'une image courante, à partir d'une pluralité de n vecteurs mouvement de référence associés respectivement à n partitions de référence de l'image courante qui ont été préalablement codées puis décodées.

Selon l'invention, dans le cas où la forme géométrique de la partition courante est différente de celle de k partitions de référence voisines, avec k≤n, le vecteur mouvement de la partition d'image courante est déterminé à partir d'une fonction d'au moins un vecteur mouvement de référence qui appartient à un ensemble de k vecteurs mouvement de référence associés respectivement aux k partitions de référence voisines.

Une telle disposition permet ainsi d'améliorer de façon importante la précision de la prédiction du vecteur mouvement d'une partition courante, en tenant compte :

- du partitionnement particulier du macrobloc courant,
- de la différence de forme ou de taille entre la partition courante considérée et les partitions de référence avoisinantes.

En outre, la prédiction selon l'invention est adaptable à tout type de méthode de calcul du vecteur mouvement prédit de la partition courante, telle qu'en particulier celle conforme à la norme H264/AVC et celle décrite dans la publication IEEE précitée.

Dans un mode de réalisation, la détermination du vecteur mouvement de la partition courante comprend les étapes de :

- dilatation spatiale d'au moins un pixel de la partition courante,

- sélection, parmi l'ensemble des k partitions de référence voisines de ladite partition courante, d'un sous-ensemble de $k_c$ partitions de référence qui chevauchent la partition courante dilatée,
- calcul de la moyenne des $k_c$ vecteurs mouvement de référence correspondant respectivement aux $k_c$ partitions de référence sélectionnées.

Une telle disposition permet ainsi de sélectionner des vecteurs mouvement de référence bien précis à partir d'un critère de choix qui est ici fondé sur la proximité entre d'une part la partition courante et, d'autre part, le(s) partition(s) de référence le(s) plus proche(s).

Dans un autre mode de réalisation, la détermination du vecteur mouvement de la partition courante comprend les étapes de :

- détermination, d'une part du centre de la partition courante, et d'autre part, du centre de chacune des k partitions de référence voisines,
- calcul de la distance qui sépare le centre déterminé de la partition courante avec respectivement le centre déterminé de chacune des k partitions de référence voisines,
- sélection, parmi les k partitions de référence voisines, de celle dont le centre est situé à la distance calculée la plus faible de la partition courante,
- sélection du vecteur mouvement de référence correspondant à la partition de référence sélectionnée.

Selon une modalité d'exécution particulière, la détermination du vecteur mouvement de la partition courante comprend les étapes de :

- sélection, parmi l'ensemble des k partitions de référence voisines de la partition courante, d'un sous-ensemble de $k_p$ partitions de référence qui sont les plus proches de la partition courante,
- calcul des distances respectives entre d'une part le centre de la partition courante, et d'autre part, le centre de chacune des $k_p$ partitions de référence les plus proches,
- calcul de la moyenne des $k_p$ vecteurs mouvement de référence correspondant respectivement aux $k_p$ partitions de référence sélectionnées, la moyenne étant pondérée par les distances respectives calculées.

De telles dispositions permettent ainsi de sélectionner de façon encore plus fine et plus ciblée un ou plusieurs vecteurs mouvement de référence à partir d'un critère de choix qui est ici fondé non seulement sur la proximité entre la partition courante et le(s) partition(s) de référence le(s) plus proche(s), mais également sur une comparaison de la distance entre d'une part le centre de la partition courante et, d'autre part, le centre de chacune des partitions de référence voisines.

Dans encore un mode de réalisation, la détermination du vecteur mouvement de la partition courante comprend les étapes de :

- prolongement d'un bord de la partition courante sur au moins certaines des k partitions de référence voisines,
- sélection, parmi les certaines partitions de référence voisines, d'un sous-ensemble de $k_{prol}$ partitions de référence qui sont situées d'un même côté du bord prolongé,
- calcul de la moyenne des $k_{prol}$ vecteurs mouvement de référence correspondant respectivement aux $k_{prol}$ partitions de référence sélectionnées.

Une telle disposition permet ainsi de sélectionner de façon ciblée un ou plusieurs vecteurs mouvement de référence bien précis à partir d'un critère de choix qui est ici fondé sur l'existence d'une discontinuité dans les macroblocs précédemment codés, puis décodés. La précision de la prédiction est ainsi améliorée car obtenue à partir de vecteurs mouvement de référence qui sont supposés être plus précis dans une zone de l'image qui contient des discontinuités que dans une zone de l'image homogène.

Dans encore un mode de réalisation, la détermination du vecteur mouvement de la partition courante comprend les étapes de :

- détermination du bord le plus long de la partition courante,
- sélection, parmi les k partitions de référence voisines, d'un sous-ensemble de $k_{bd}$ partitions de référence ayant ledit bord en commun.

Une telle disposition permet ainsi de sélectionner des vecteurs mouvement de référence bien précis à partir d'un critère de choix qui est ici fondé sur la proximité entre d'une part la partition courante et, d'autre part, le(s) partition(s) de référence le(s) plus proche(s).

Une telle sélection est par ailleurs affinée par la détermination du bord le plus long de la partition courante qui délimite ces dernières d'au moins une partition de référence voisine.

Selon une première variante, l'étape de sélection est suivie d'une étape de calcul de la moyenne des $k_{bd}$ vecteurs mouvement de référence correspondant respectivement aux $k_{bd}$ partitions de référence sélectionnées.

Selon une seconde variante, l'étape de sélection consiste à choisir, dans le sous-ensemble de $k_{bd}$ partitions de référence ayant ledit bord le plus long en commun, la partition de référence dont la portion de bord en commun est la plus longue, puis le vecteur mouvement de référence correspondant à la partition de référence sélectionnée.

Dans encore un autre mode de réalisation, la détermination du vecteur mouvement de la partition courante comprend les étapes de :

- calcul, d'une part, d'une valeur pixellique moyenne de la partition courante, et d'autre part, d'une valeur pixellique du même type pour chacune des k partitions de référence voisines,
- sélection, parmi les k partitions de référence voisines, de celle dont la valeur pixellique moyenne calculée est la plus proche de celle de la partition courante,
- sélection du vecteur mouvement de référence correspondant à la partition de référence sélectionnée.

Une telle disposition permet ainsi de sélectionner un vecteur mouvement de référence bien précis à partir d'une certaine caractéristique qui est ici fondée sur l'identification d'une composante pixellique particulière, telle que par exemple la luminance moyenne d'un motif, d'une couleur, d'un contour, etc... dans une partition de référence voisine de la partition courante.

Selon un second aspect, la présente invention concerne un procédé de codage d'une image ou d'une séquence d'images générant un flux de données comportant des données représentatives d'au moins une partition d'image, un tel procédé comprenant une étape de prédiction spatiale d'un vecteur mouvement de la partition d'image.

Un tel procédé de codage est caractérisé en ce que la prédiction spatiale est effectuée conformément au procédé de prédiction spatiale précité.

Selon un troisième aspect, la présente invention concerne un procédé de décodage d'un flux de données représentatif d'une image ou d'une séquence d'images, ledit flux comportant des données représentatives d'au moins une partition d'image, un tel procédé comprenant une étape de prédiction spatiale d'un vecteur mouvement de la partition d'image.

Un tel procédé est caractérisé en ce que la prédiction spatiale est effectuée conformément au procédé de prédiction spatiale précité.

Corrélativement, selon un quatrième aspect, la présente invention concerne un dispositif de prédiction spatiale d'un vecteur mouvement d'une partition d'une image courante, à partir d'une pluralité de n vecteurs mouvement de référence associés respectivement à n partitions de référence de l'image courante qui ont été préalablement codées puis décodées.

Selon l'invention, dans le cas où la forme géométrique de la partition courante est différente de celle de k partitions de référence voisines, avec k≤n, le dispositif de prédiction spatiale comprend un module de calcul apte à déterminer le vecteur mouvement de la partition d'image courante à partir d'une fonction d'au moins un vecteur mouvement de référence qui appartient à un ensemble de k vecteurs mouvement de référence associés respectivement aux k partitions de référence voisines.

Corrélativement, selon un cinquième aspect, la présente invention concerne un dispositif de codage d'une image ou d'une séquence d'images générant un flux de données comportant des données représentatives d'au moins une partition d'image, un tel dispositif comprenant des moyens de prédiction spatiale d'un vecteur mouvement de la partition d'image.

Un tel dispositif de codage est caractérisé en ce que les moyens de prédiction sont contenus dans le dispositif de prédiction spatiale précité.

Corrélativement, selon un sixième aspect, la présente invention concerne un dispositif de décodage d'un flux de données représentatif d'une image ou d'une séquence d'images, ledit flux comportant des données représentatives d'au moins une partition d'image, un tel dispositif comprenant des moyens de prédiction spatiale d'un vecteur mouvement de la partition d'image.

Un tel dispositif de décodage est caractérisé en ce que les moyens de prédiction sont contenus dans le dispositif de prédiction spatiale précité.

L'invention concerne encore un programme d'ordinateur comportant des instructions pour mettre en œuvre l'un des procédés selon l'invention, lorsqu'il est exécuté sur un ordinateur.

Le procédé de codage, le procédé de décodage, le dispositif de prédiction spatiale, le dispositif de codage et le dispositif de décodage présentent au moins les mêmes avantages que ceux conférés par le procédé de prédiction spatiale selon la présente invention.

De façon correspondante, l'invention est également applicable à une prédiction temporelle du vecteur mouvement. A cet effet, selon un septième aspect, la présente invention concerne un procédé de prédiction temporelle d'un vecteur mouvement d'une partition d'une image courante, le vecteur mouvement pointant sur une zone d'image de référence qui a la même forme que la partition courante et qui appartient à une image de référence différente de l'image courante et ayant été préalablement découpée, à l'issue d'un codage puis d'un décodage, en une pluralité de n partitions.

Selon l'invention, dans le cas où la zone d'image de référence est disposée à l'intérieur d'une des n partitions de référence, le vecteur mouvement de la partition d'image courante est déterminé à partir d'une fonction d'au moins un vecteur mouvement de référence appartenant à un ensemble de k vecteurs mouvement de référence associés respectivement à k partitions de la pluralité de n partitions de référence, les k partitions étant voisines de ladite zone d'image de référence.

Une telle disposition permet ainsi d'améliorer de façon importante la précision de la prédiction temporelle du vecteur mouvement d'une partition courante, en tenant compte :

- du partitionnement particulier du macrobloc de référence,
- de la différence de forme ou de taille entre la zone d'image de référence considérée et les partitions de référence avoisinantes.

En outre, la prédiction temporelle selon l'invention est adaptable à tout type de méthode de calcul du vecteur mouvement prédit de la partition courante, telle qu'en particulier celle conforme à la norme H264/AVC et celle décrite dans la publication IEEE précitée.

Dans un mode de réalisation, la détermination du vecteur mouvement de la partition courante comprend les étapes de :

- dilatation spatiale d'au moins un pixel de la zone d'image de référence,
- sélection, parmi l'ensemble des k partitions de référence voisines de la zone d'image de référence, d'un sous-ensemble de $k_c$ partitions de référence qui chevauchent la zone d'image de référence dilatée,
- calcul de la moyenne des $k_c$ vecteurs mouvement de référence correspondant respectivement aux $k_c$ partitions de référence sélectionnées.

Une telle disposition permet ainsi de sélectionner des vecteurs mouvement de référence bien précis à partir d'un critère de choix qui est ici fondé sur la proximité entre d'une part la zone d'image de référence et, d'autre part, le(s) partition(s) de référence le(s) plus proche(s).

Dans un autre mode de réalisation, la détermination du vecteur mouvement de la zone d'image de référence comprend les étapes de :

- détermination, d'une part du centre de la zone d'image de référence, et d'autre part, du centre de chacune des k partitions de référence voisines,
- calcul de la distance qui sépare le centre déterminé de la zone d'image de référence avec respectivement le centre déterminé de chacune des k partitions de référence voisines,
- sélection, parmi les k partitions de référence voisines, de celle dont le centre est situé à la distance calculée la plus faible de la zone d'image de référence,
- sélection du vecteur mouvement de référence correspondant à la partition de référence sélectionnée.

Selon une modalité d'exécution particulière, la détermination du vecteur mouvement de la partition courante comprend les étapes de :

- sélection, parmi l'ensemble des k partitions de référence voisines de la zone d'image de référence, d'un sous-ensemble de $k_p$ partitions de référence qui sont les plus proches de la zone d'image de référence,
- calcul des distances respectives entre d'une part le centre de la zone d'image de référence, et d'autre part, le centre de chacune des $k_p$ partitions de référence les plus proches,
- calcul de la moyenne des $k_p$ vecteurs mouvement de référence correspondant respectivement aux $k_p$ partitions de référence sélectionnées, la moyenne étant pondérée par les distances respectives calculées.

De telles dispositions permettent ainsi de sélectionner de façon encore plus fine et plus ciblée un ou plusieurs vecteurs mouvement de référence à partir d'un critère de choix qui est ici fondé non seulement sur la proximité entre la zone d'image de référence et le(s) partition(s) de référence le(s) plus proche(s), mais également sur une comparaison de la distance entre d'une part le centre de la zone d'image de référence et, d'autre part, le centre de chacune des partitions de référence voisines.

Dans encore un mode de réalisation, la détermination du vecteur mouvement de la partition courante comprend les étapes de :

- prolongement d'un bord de la zone d'image de référence sur au moins certaines des k partitions de référence voisines,
- sélection, parmi les certaines partitions de référence voisines, d'un sous-ensemble de $k_{prol}$ partitions de référence qui sont situées d'un même côté du bord prolongé,
- calcul de la moyenne des $k_{prol}$ vecteurs mouvement de référence correspondant respectivement aux $k_{prol}$ partitions de référence sélectionnées.

Une telle disposition permet ainsi de sélectionner de façon ciblée un ou plusieurs vecteurs mouvement de référence bien précis à partir d'un critère de choix qui est ici fondé sur l'existence d'une discontinuité dans les macroblocs précédemment codés, puis décodés. La précision de la prédiction temporelle est ainsi améliorée car obtenue à partir de vecteurs mouvement de référence qui sont supposés être plus précis dans une zone de l'image qui contient des discontinuités que dans une zone de l'image homogène.

Dans encore un mode de réalisation, la détermination du vecteur mouvement de la partition courante comprend les étapes de :

- détermination du bord le plus long de la zone d'image de référence,
- sélection, parmi les k partitions de référence voisines, d'un sous-ensemble de $k_{bd}$ partitions de référence ayant ledit bord en commun.

Une telle disposition permet ainsi de sélectionner des vecteurs mouvement de référence bien précis à partir d'un critère de choix qui est ici fondé sur la proximité entre d'une part la zone d'image de référence et, d'autre part, le(s) partition(s) de référence le(s) plus proche(s).

Une telle sélection est par ailleurs affinée par la détermination du bord le plus long de la zone d'image de référence qui délimite ces dernières d'au moins une partition de référence voisine.

Selon une première variante, l'étape de sélection est suivie d'une étape de calcul de la moyenne des $k_{bd}$ vecteurs mouvement de référence correspondant respectivement aux $k_{bd}$ partitions de référence sélectionnées.

Selon une seconde variante, l'étape de sélection consiste à choisir, dans le sous-ensemble de $k_{bd}$ partitions de référence ayant ledit bord le plus long en commun, la partition de référence dont la portion de bord en commun est la plus longue, puis le vecteur mouvement de référence correspondant à la partition de référence sélectionnée.

Dans encore un autre mode de réalisation, la détermination du vecteur mouvement de la partition courante comprend les étapes de :

- calcul, d'une part, d'une valeur pixellique moyenne de la zone d'image de référence, et d'autre part, d'une valeur pixellique du même type pour chacune des k partitions de référence voisines,
- sélection, parmi les k partitions de référence voisines, de celle dont la valeur pixellique moyenne calculée est la plus proche de celle de la zone d'image de référence,
- sélection du vecteur mouvement de référence correspondant à la partition de référence sélectionnée.

Une telle disposition permet ainsi de sélectionner un vecteur mouvement de référence bien précis à partir d'une certaine caractéristique qui est ici fondée sur l'identification d'une composante pixellique particulière, telle que par exemple la luminance moyenne d'un motif, d'une couleur, d'un contour, etc... dans une partition de référence voisine de la zone d'image de référence.

Selon un huitième aspect, la présente invention concerne un procédé de codage d'une image ou d'une séquence d'images générant un flux de données comportant des données représentatives d'au moins une partition d'image, un tel procédé comprenant une étape de prédiction temporelle d'un vecteur mouvement de la partition d'image.

Un tel procédé de codage est caractérisé en ce que la prédiction temporelle est effectuée conformément au procédé de prédiction temporelle précité.

Selon un neuvième aspect, la présente invention concerne un procédé de décodage d'un flux de données représentatif d'une image ou d'une séquence d'images, ledit flux comportant des données représentatives d'au moins une partition d'image, un tel procédé comprenant une étape de prédiction temporelle d'un vecteur mouvement de la partition d'image.

Un tel procédé est caractérisé en ce que la prédiction temporelle est effectuée conformément au procédé de prédiction temporelle précité.

Corrélativement, selon un dixième aspect, la présente invention concerne un dispositif de prédiction temporelle d'un vecteur mouvement d'une partition d'une image courante, le vecteur mouvement pointant sur une zone d'image de référence qui a la même forme que la partition courante et qui appartient à une image de référence différente de l'image courante et ayant été préalablement découpée, à l'issue d'un codage puis d'un décodage, en une pluralité de n partitions.

Selon l'invention, dans le cas où la zone d'image de référence est disposée à l'intérieur d'une des n partitions de référence, le dispositif de prédiction temporelle comprend un module de calcul apte à déterminer le vecteur mouvement de la partition d'image courante à partir d'une fonction d'au moins un vecteur mouvement de référence appartenant à un ensemble de k vecteurs mouvement de référence associés respectivement à k partitions de la pluralité de n partitions de référence, les k partitions étant voisines de la zone d'image de référence.

Corrélativement, selon un onzième aspect, la présente invention concerne un dispositif de codage d'une image ou d'une séquence d'images générant un flux de données comportant des données représentatives d'au moins une partition d'image, un tel dispositif comprenant des moyens de prédiction temporelle d'un vecteur mouvement de la partition d'image.

Un tel dispositif de codage est caractérisé en ce que les moyens de prédiction sont contenus dans le dispositif de prédiction temporelle précité.

Corrélativement, selon un douzième aspect, la présente invention concerne un dispositif de décodage d'un flux de données représentatif d'une image ou d'une séquence d'images, ledit flux comportant des données représentatives d'au moins une partition d'image, un tel dispositif comprenant des moyens de prédiction temporelle d'un vecteur mouvement de la partition d'image.

Un tel dispositif de décodage est caractérisé en ce que les moyens de prédiction sont contenus dans le dispositif de prédiction temporelle précité.

L'invention concerne encore un programme d'ordinateur comportant des instructions pour mettre en œuvre l'un des procédés selon l'invention, lorsqu'il est exécuté sur un ordinateur.

Le procédé de codage, le procédé de décodage, le dispositif de prédiction temporelle, le dispositif de codage et le dispositif de décodage présentent au moins les mêmes avantages que ceux conférés par le procédé de prédiction temporelle selon la présente invention.

Brève description des dessins

D'autres caractéristiques et avantages apparaîtront à la lecture d'un mode de réalisation préféré décrit en référence aux figures dans lesquelles:

- la figure 1A représente un exemple de prédiction temporelle de l'art antérieur qui exploite les corrélations temporelles entre un macrobloc courant à coder d'une image N et un macrobloc de référence d'une image précédente N-1, le macrobloc de référence ayant une forme carrée et étant disposé à l'intérieur d'un macrobloc de référence voisin,
- la figure 1B représente un macrobloc découpé selon différents types de partitions de l'art antérieur,
- la figure 1C représente un exemple de prédiction temporelle de l'art antérieur qui exploite les corrélations temporelles entre un macrobloc courant à coder d'une image N et un macrobloc de référence d'une image précédente N-1, le macrobloc courant étant découpé selon plusieurs partitions de forme arbitraire, le vecteur mouvement d'une de ces partitions pointant sur une zone d'image de référence qui est disposée à l'intérieur d'un macrobloc de référence voisin,
- la figure 1D représente un exemple de prédiction spatiale de l'art antérieur qui exploite les corrélations spatiales entre un macrobloc courant à coder d'une image N et des partitions de référence voisine de cette image,
- la figure 2 représente les étapes du procédé de codage selon l'invention,
- la figure 3 représente un mode de réalisation d'un dispositif de codage selon l'invention,
- les figures 4A et 4B représentent une première méthode pour prédire un vecteur mouvement conformément à l'invention, selon les deux types de prédiction, respectivement spatial et temporel,
- les figures 5A et 5B représentent une seconde méthode pour prédire un vecteur mouvement conformément à l'invention, selon les deux types de prédiction, respectivement spatial et temporel,
- les figures 6A et 6B représentent une troisième méthode pour prédire un vecteur mouvement selon l'invention, selon les deux types de prédiction, respectivement spatial et temporel,
- les figures 7A et 7B représentent une quatrième méthode pour prédire un vecteur mouvement conformément à l'invention, selon les deux types de prédiction, respectivement spatial et temporel,
- les figures 8A et 8B représentent une cinquième méthode pour prédire un vecteur mouvement conformément à l'invention, selon les deux types de prédiction, respectivement spatial et temporel,
- la figure 9 représente un dispositif de décodage selon l'invention,
- la figure 10 représente des étapes du procédé de décodage selon l'invention.

Description détaillée d'un mode de réalisation

Un mode de réalisation de l'invention va maintenant être décrit, dans lequel le procédé de codage selon l'invention est utilisé pour coder en Inter une séquence d'images selon un flux binaire proche de celui qu'on obtient par un codage selon la norme H.264/MPEG-4 AVC. Dans ce mode de réalisation, le procédé de codage selon l'invention est par exemple implémenté de manière logicielle ou matérielle par modifications d'un codeur initialement conforme à la norme H.264/MPEG-4 AVC. Le procédé de codage selon l'invention est représenté sous la forme d'un algorithme comportant des étapes C0 à C6, représentées à la **figure 2.**

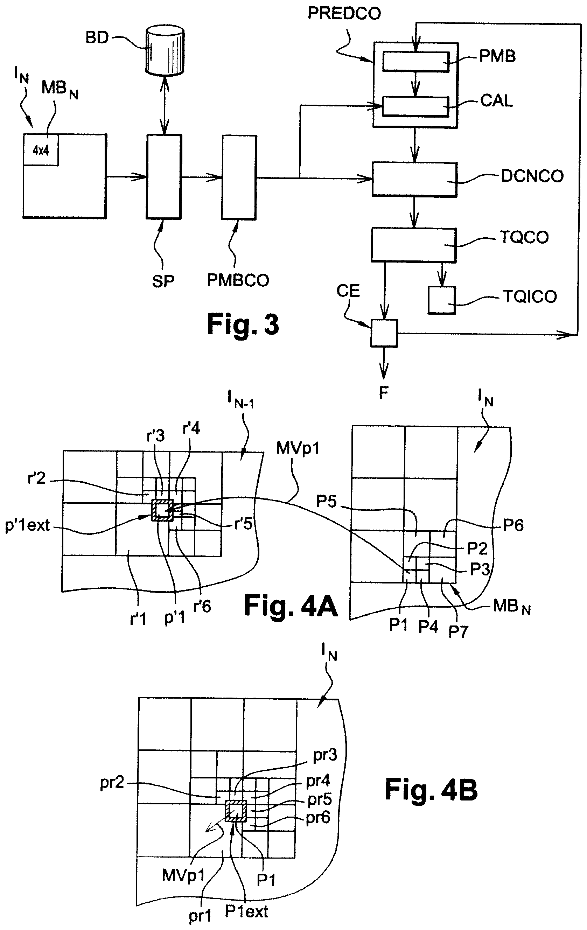

Le procédé de codage selon l'invention est implémenté dans un dispositif de codage CO représenté à la **figure 3.**

La première étape C0, représentée à la **figure 2,** est la sélection, pour un macrobloc appartenant à une image de la séquence d'images à coder, notée $I_N$ sur la **figure 3,** d'un partitionnement particulier associé à ce macrobloc.

Il convient de noter que l'étape C0 peut être facultative, la prédiction du vecteur mouvement du macrobloc courant pouvant être effectuée en considérant ce dernier dans sa totalité, c'est-à-dire comme une seule et unique partition.

Au cours de l'étape C0, un macrobloc $MB_N$, par exemple de taille 4x4, et appartenant à l'image $I_N$, est appliqué en entrée d'un module SP de sélection de partitionnement représenté à la **figure 3.**

Ce module de partitionnement SP utilise par exemple une méthode de choix par compétition exhaustive ou bien encore une méthode de choix à l'aide d'un algorithme avec à-priori. De telles méthodes sont bien connues de l'homme du métier (cf: G.J. Sullivan and T.Wiegand, "Rate-distortion optimization for video compression", IEEE Signal Proc. Mag., pp.74-90, 1998). Elles ne seront donc pas décrites plus avant.

Les différents types d'algorithmes de partitionnement possibles sont regroupés dans une base de données BD du codeur CO. Ils permettent d'obtenir un découpage du macrobloc courant en une pluralité de partitions soit de forme rectangulaire ou carrée, soit d'autres formes géométriques, telles que par exemple des formes sensiblement linéaires, soit de forme tout à fait arbitraire.

L'étape suivante C1 représentée à la **figure 2** est le découpage du macrobloc $MB_N$ en un nombre de p partitions à prédire.

Dans l'exemple représenté à la **figure 4A,** le macrobloc $MB_N$ est découpé en par exemple quatre partitions P1, P2, P3 et P4 plus petites de forme carrée. Un tel découpage est effectué par un module PMBCO de partitionnement de macroblocs représenté à la **figure 3** qui utilise un algorithme classique de partitionnement.

A la suite de l'étape de partitionnement C1, au cours d'une étape C2 représentée à la **figure 2,** le module de partitionnement PMBCO transmet le macrobloc $MB_N$ qui vient d'être partitionné à un module de prédiction PREDCO représenté à la **figure 3.**

De façon classique, un tel module de prédiction PREDCO est destiné à prédire le macrobloc courant $MB_N$ partitionné par rapport à une pluralité de n partitions de référence appartenant soit à une image précédente $I_{N-1}$ qui a été préalablement codée puis décodée, soit à l'image courante $I_N$.

Dans l'exemple représenté sur la **figure 4A,** six partitions de référence r'1, r'2, r'3, r'4, r'5 et r'6 sont représentées.

En référence à la **figure 3,** les partitions de référence de l'image précédente $I_{N-1}$ sont codées conformément à la norme H.264/MPEG-4AVC, c'est-à-dire qu'elles subissent, de façon connue en soi:

- un codage par transformée en cosinus discrète et quantification qui est effectué par un module TQCO de transformée et de quantification,
- puis un décodage par transformée en cosinus discrète inverse et quantification inverse, lequel est effectué par le module TQICO de transformée et de quantification inverse.

En référence toujours à la **figure 3,** le module de prédiction PREDCO comprend :

- un module de partitionnement PMB destiné à découper les macroblocs de référence de l'image $I_{N-1}$ selon une pluralité de n partitions de référence r'1, r'2,...,r'n,
- un module de calcul CAL destiné à prédire chaque vecteur mouvement MVp1, MVp2,...,MVpp qui sont associés respectivement aux partitions P1, P2,...,Pp du macrobloc courant $MB_N$.

Conformément à l'invention, selon le type de prédiction du vecteur mouvement MVp1, MVp2,...,MVpp, à savoir soit spatiale, soit temporelle, dans le cas où respectivement soit la partition courante P1, P2,...,Pp, soit la zone d'image de référence p'1, p'2,...,p'p pointée par le vecteur mouvement MVp1, MVp2,..., MVpp, a une forme géométrique ou bien une taille respectivement différente de la forme géométrique ou bien de la taille d'au moins une partition de référence choisie parmi k partitions de référence avoisinantes, où k≤n, le module de calcul CAL prédit le vecteur mouvement de la partition d'image courante à partir d'une fonction d'au moins un vecteur mouvement de référence qui appartient à un ensemble de k vecteurs mouvement de référence associés respectivement aux k partitions de référence voisines.

Au cours de l'étape C3 représentée à la **figure 2,** le module de partitionnement PMB de la **figure 3** procède au découpage de l'image de référence $I_{N-1}$ selon n partitions de référence r'1, r'2,..., r'n.

Au cours de l'étape C4 représentée à la **figure 2,** le module de calcul CAL de la **figure 3** calcule, pour chaque partition courante, le vecteur mouvement prédit qui lui est respectivement associé, selon les différentes méthodes selon l'invention décrites ci-dessous.

Selon une première méthode de prédiction du vecteur mouvement telle que représentée à la **figure 4A,** dans le cas d'une prédiction de type temporelle, compte tenu du fait que la zone d'image de référence p'1 pointée par le vecteur mouvement MVp1 est disposée à l'intérieur de la partition de référence r'1 avoisinante qui présente une taille différente de celle de la zone d'image de référence p'1, le module CAL procède à une dilatation d'au moins un pixel de la zone d'image de référence p'1. Une telle dilatation consiste par exemple en une propagation d'un opérateur mathématique de dilatation morphologique bien connu de l'homme du métier. Dans l'exemple représenté, la dilatation effectuée est d'un seul pixel et est représentée par la zone hachurée sur la **figure 4A.** Le module de calcul CAL sélectionne ensuite un sous-ensemble de $k_c$ partitions de référence avoisinantes qui chevauchent la zone d'image de référence p'1ext dilatée. Dans l'exemple représenté, il s'agit des $k_c$ partitions de référence avoisinantes r'1, r'2, r'3, r'4, r'5 et r'6. Le module de calcul CAL détermine alors le vecteur mouvement prédit MVp1 de la partition courante P1 en fonction des vecteurs mouvement de référence MVr'1, MVr'2, MVr'3, MVr'4, MVr'5 et MVr'6 associés respectivement aux six partitions de référence chevauchantes r'1, r'2, r'3, r'4, r'5 et r'6 représentées à la **figure 4A.** Une telle détermination consiste par exemple à calculer le médian des vecteurs mouvement de référence MVr'1, MVr'2, MVr'3, MVr'4, MVr'5, MVr'6 conformément à l'équation ci-dessous :

$$MVp1 = Moy\ (MVr'1,\ MVr'2,\ MVr'3,\ MVr'4,\ MVr'5,\ MVr'6)$$

Selon une variante de cette première méthode, le module CAL détermine une moyenne des vecteurs mouvement de référence MVr'1, MVr'2, MVr'3, MVr'4, MVr'5, MVr'6 qui est pondérée par le nombre de pixels commun entre la zone d'image de référence dilatée p'1ext et chacune des partitions de référence r'1, r'2, r'3, r'4, r'5, r'6 chevauchant cette dernière. Une telle détermination revient à calculer le vecteur mouvement prédit MVp1 conformément à l'équation ci-dessous :

$$MVp1 = \frac{1}{\sum_{k_c} \lceil p'1ext \cap r'_{k_c} \rceil} \cdot \left( mvr'_{k_c} \cdot \lceil p'1ext \cap r'_{k_c} \rceil \right)$$

avec :

- $k_c$=6,
et - $\lceil p'1ext \cap r'k_c \rceil$ représentant le nombre de pixels commun entre la zone d'image de référence dilatée p'1ext et chacune des partitions de référence r'1, r'2, r'3, r'4, r'5, r'6 chevauchant cette dernière.

$$MVp1 = \frac{1}{20} \cdot \left( 9r'_1 + 4r'_3 + 4r'_5 + r'_2 + r'_4 + r'_6 \right).$$

Dans l'exemple représenté à la **figure 4A,**

La première méthode et sa variante qui viennent d'être décrite ci-dessus peuvent être appliquées à la prédiction spatiale d'un vecteur mouvement MVp1 tel que représenté à la **figure 4B.** Dans l'exemple représenté, compte tenu du fait que la partition courante P1 a une taille différente de la partition de référence pr1 avoisinante, le module CAL procède à une dilatation d'au moins un pixel de la partition courante P1 comme décrit ci-dessus en référence à la **figure 4A,** de façon à obtenir une partition courante dilatée P1ext. Dans l'exemple représenté, la dilatation effectuée est d'un seul pixel et est représentée par la zone hachurée sur la **figure 4B.** Le module de calcul CAL sélectionne ensuite un sous-ensemble de $k_c$ partitions de référence avoisinantes qui chevauchent la partition courante dilatée P1ext. Dans l'exemple représenté, il s'agit des $k_c$ partitions de référence avoisinantes pr1, pr2, pr3, pr4, pr5 et pr6. Le module de calcul CAL détermine alors le vecteur mouvement prédit MVp1 de la partition courante P1 en fonction des vecteurs mouvement de référence MVr1, MVr2, MVr3, MVr4, MVr5 et MVr6 associés respectivement aux six partitions de référence chevauchantes pr1, pr2, pr3, pr4, pr5 et pr6 représentées à la **figure 4B.** Une telle détermination consiste par exemple à calculer le médian des vecteurs mouvement de référence MVr1, MVr2, MVr3, MVr4, MVr5, MVr6 conformément à l'équation ci-dessous :

$$MVp1 = Moy\ (MVr1,\ MVr2,\ MVr3,\ MVr4,\ MVr5,\ MVr6)$$

En variante, le module CAL détermine une moyenne des vecteurs mouvement de référence MVr1, MVr2, MVr3, MVr4, MVr5, MVr6 qui est pondérée par le nombre de pixels commun entre la partition courante dilatée P1ext et chacune des partitions de référence pr1, pr2, pr3, pr4, pr5, pr6 chevauchant cette dernière.

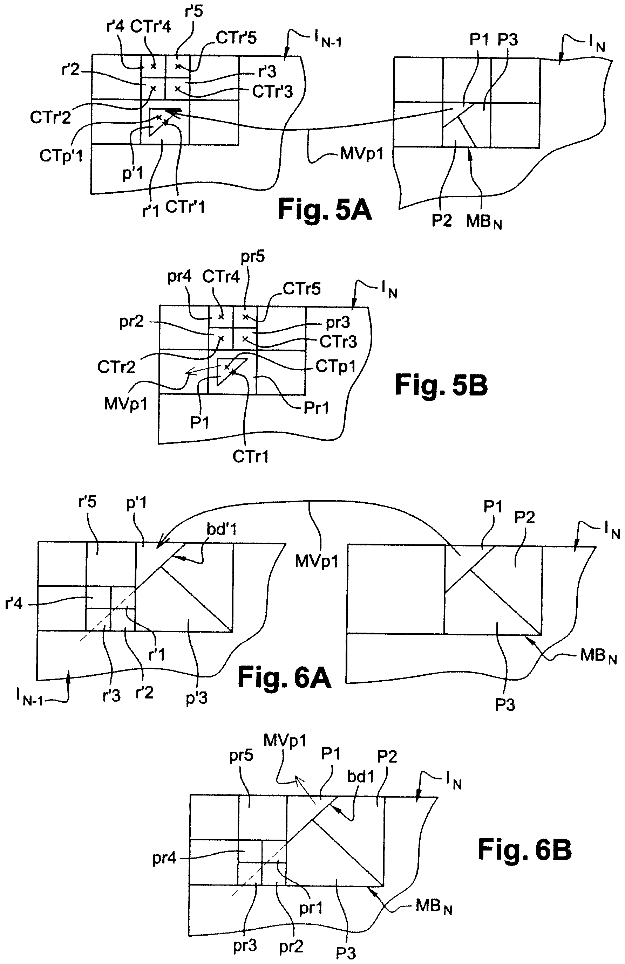

Une seconde méthode de prédiction de vecteur mouvement va maintenant être décrite en référence à la **figure 5A.** Dans l'exemple représenté, le macrobloc $MB_N$ est découpé en par exemple trois partitions P1, P2 et P3 de forme arbitraire. L'image de référence $I_{N-1}$ est quant à elle découpée selon n partitions de référence r'1, r'2,..., r'n.

Selon la seconde méthode de prédiction du vecteur mouvement telle que représentée à la **figure 5A,** dans le cas d'une prédiction de type temporelle, compte tenu du fait que la zone d'image de référence p'1 pointée par le vecteur mouvement MVp1 a une forme géométrique différente de celle de la partition de référence r'1 avoisinante, le module CAL détermine le centre de la zone d'image de référence p'1, noté CTp'1 sur la **figure 5A,** et d'autre part, le centre correspondant CTr'1, CTr'2, CTr'3, CTr'4, CTr'5 de chacune des partitions de référence voisines r'1, r'2, r'3, r'4, r'5. Le module CAL calcule ensuite la distance qui sépare le centre CTp'1 de la zone d'image de référence p'1 avec respectivement chacun des centres CTr'1, CTr'2, CTr'3, CTr'4, CTr'5. Les centres CTp'1, CTr'1, CTr'2, CTr'3, CTr'4, CTr'5 sont calculés au moyen d'un algorithme qui minimise la somme des distances par rapport à tous les points de la zone d'image de référence P'1, et des partitions de référence r'1, r'2, r'3, r'4, r'5 respectivement. Le module CAL sélectionne alors, parmi les partitions de référence voisines r'1, r'2, r'3, r'4, r'5, celle dont le centre est situé à la distance calculée la plus faible de la zone d'image de référence p'1. Dans l'exemple représenté, il s'agit de la partition de référence r'1. Enfin, le module CAL calcule le vecteur mouvement prédit MVp1 comme étant égal au vecteur mouvement de référence MVr'1 correspondant à la partition de référence sélectionnée r'1.

Dans l'exemple représenté à la **figure 5A,** MVp1=MVr'1.

Selon une variante de cette seconde méthode, le module CAL sélectionne, parmi l'ensemble des partitions de référence voisines r'1 à r'5, celles qui sont les plus proches de la zone d'image de référence p'1. Dans l'exemple représenté, il s'agit des partitions de référence r'1, r'2 et r'3. Le module CAL détermine ensuite le centre CTp'1 de la zone d'image de référence p'1, et d'autre part, le centre correspondant CTr'1, CTr'2, CTr'3 de chacune des partitions de référence r'1, r'2, r'3 les plus proches. Le module CAL calcule ensuite la distance qui sépare le centre CTp'1 de la zone d'image de référence p'1 avec respectivement chacun des centres CTr'1, CTr'2, CTr'3. Le module CAL calcule le vecteur mouvement prédit MVp1 comme étant égal à la moyenne des vecteurs mouvement de référence MVr'1, MVr'2, MVr'3, ladite moyenne étant pondérée par les trois distances respectives calculées.

La seconde méthode et sa variante qui viennent d'être décrite ci-dessus peuvent être appliquées à la prédiction spatiale d'un vecteur mouvement MVp1 tel que représenté à la **figure 5B.** Dans l'exemple représenté, compte tenu du fait que la partition courante P1 a une forme géométrique différente de celle de la partition de référence pr1 avoisinante, le module CAL détermine le centre de la partition courante P1, noté CTp1 sur la **figure 5B,** et d'autre part, le centre correspondant CTr1, CTr2, CTr3, CTr4, CTr5 de chacune des partitions de référence voisines pr1, pr2, pr3, pr4, pr5. Le module CAL calcule ensuite la distance qui sépare le centre CTp1 de la partition courante P1 avec respectivement chacun des centres CTr1, CTr2, CTr3, CTr4, CTr5. Le module CAL sélectionne alors, parmi les partitions de référence voisines pr1, pr2, pr3, pr4, pr5, celle dont le centre est situé à la distance calculée la plus faible de la partition courante P1. Dans l'exemple représenté, il s'agit de la partition de référence pr1. Enfin, le module CAL calcule le vecteur mouvement prédit MVp1 comme étant égal au vecteur mouvement de référence MVr1 correspondant à la partition de référence sélectionnée pr1.

Dans l'exemple représenté à la **figure 5B,** MVp1=MVr1.

En variante, le module CAL sélectionne, parmi l'ensemble des partitions de référence voisines pr1 à pr5, celles qui sont les plus proches de la partition courante P1. Dans l'exemple représenté, il s'agit des partitions de référence pr1, pr2 et pr3. Le module CAL détermine ensuite le centre CTp1 de la partition courante P1, et d'autre part, le centre correspondant CTr1, CTr2, CTr3 de chacune des partitions de référence pr1, pr2, pr3. Le module CAL calcule ensuite la distance qui sépare le centre CTp1 de la partition courante P1 avec respectivement chacun des centres CTr1, CTr2, CTr3. Le module CAL calcule le vecteur mouvement prédit MVp1 comme étant égal à la moyenne des vecteurs mouvement de référence MVr1, MVr2, MVr3, ladite moyenne étant pondérée par les trois distances respectives calculées.

Une troisième méthode de prédiction de vecteur mouvement va maintenant être décrite en référence à la **figure 6A.** Dans l'exemple représenté, le macrobloc $MB_N$ est découpé en par exemple trois partitions P1, P2 et P3 de forme arbitraire. L'image de référence $I_{N-1}$ est quant à elle découpée selon n partitions de référence r'1, r'2,..., r'n.

Selon la troisième méthode de prédiction du vecteur mouvement telle que représentée à la **figure 6A,** dans le cas d'une prédiction de type temporelle, compte tenu du fait que la zone d'image de référence p'1 pointée par le vecteur mouvement MVp1 a une forme géométrique différente de celle des partitions de référence r'1 à r'5 avoisinantes, le module CAL procède au prolongement d'un bord bd'1 de la zone d'image de référence p'1 sur au moins certaines des partitions de référence voisines précitées. Le prolongement est représenté par un trait en pointillé sur la **figure 6A.** Le module CAL sélectionne ensuite, parmi les partitions de référence voisines, les partitions de référence qui sont situées d'un même côté du bord prolongé. Dans l'exemple représenté, il s'agit des partitions de référence r'1, r'2, r'3. Le module CAL calcule alors le vecteur mouvement prédit MVp1 comme étant égal à la moyenne des vecteurs mouvement de référence MVr'1, MVr'2, MVr'3 qui sont associés respectivement aux partitions de référence sélectionnées r'1, r'2, r'3.

La troisième méthode qui vient d'être décrite ci-dessus peut être appliquée à la prédiction spatiale d'un vecteur mouvement MVp1 tel que représenté à la **figure 6B.** Dans l'exemple représenté, compte tenu du fait que la partition courante P1 a une forme géométrique différente de celle des partitions de référence pr1 à pr5 avoisinantes, le module CAL procède au prolongement d'un bord bd1 de la partition courante P1 sur au moins certaines des partitions de référence voisines précitées. Le prolongement est représenté par un trait en pointillé sur la **figure 6B.** Le module CAL sélectionne ensuite, parmi les partitions de référence voisines, les partitions de référence qui sont situées d'un même côté du bord prolongé. Dans l'exemple représenté, il s'agit des partitions de référence pr1, pr2, pr3. Le module CAL calcule alors le vecteur mouvement prédit MVp1 comme étant égal à la moyenne des vecteurs mouvement de référence MVr1, MVr2, MVr3 qui sont associés respectivement aux partitions de référence sélectionnées pr1, pr2, pr3.

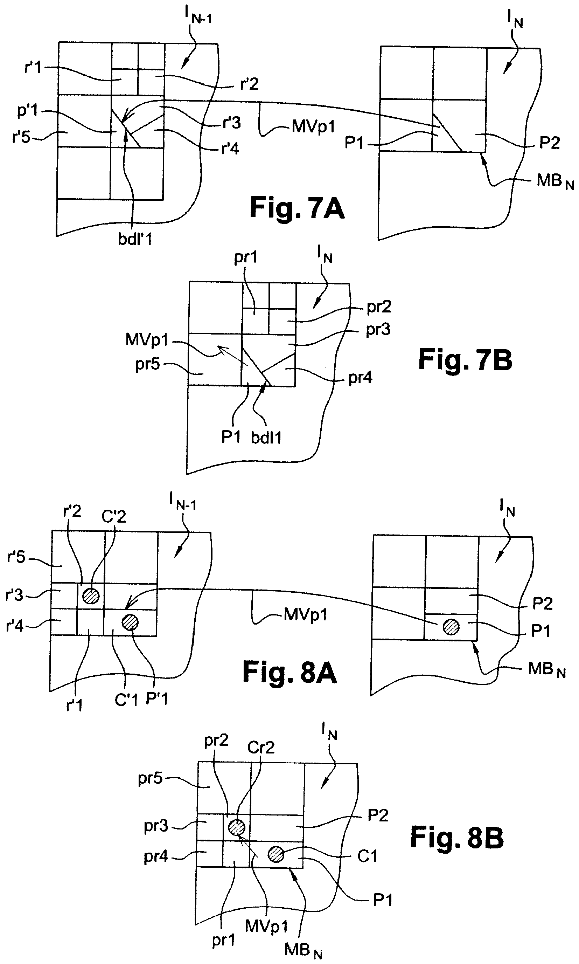

Une quatrième méthode de prédiction de vecteur mouvement va maintenant être décrite en référence à la **figure 7A.** Dans l'exemple représenté, le macrobloc $MB_N$ est découpé en par exemple deux partitions P1 et P2 de forme arbitraire. L'image de référence $I_{N-1}$ est quant à elle découpée selon n partitions de référence r'1, r'2,..., r'n.

Selon la quatrième méthode de prédiction du vecteur mouvement telle que représentée à la **figure 7A,** dans le cas d'une prédiction de type temporelle, compte tenu du fait que la zone d'image de référence p'1 pointée par le vecteur mouvement MVp1 a une forme géométrique différente des partitions de référence avoisinantes r'1 à r'5, le module CAL détermine le bord le plus long de la zone d'image de référence p'1. Un tel bord est noté bdl'1 sur la **figure 7A.** Le module CAL sélectionne ensuite, parmi les partitions de référence voisines r'1 à r'5, les partitions de référence ayant le bord bdl'1 en commun. Dans l'exemple représenté, il s'agit des partitions de référence r'3 et r'4.

Selon une première variante de cette quatrième méthode, le module CAL calcule le vecteur mouvement prédit MVp1 comme étant égal à la moyenne des vecteurs mouvement de référence MVr'3 et MVr'4 qui sont associés respectivement aux partitions de référence sélectionnées r'3 et r'4.

Selon une seconde variante, le module CAL pondère ladite moyenne calculée par la longueur du bord de la partition de référence r'3 qui est en commun avec la zone d'image de référence p'1 et par la longueur du bord de la partition de référence r'4 qui est en commun avec la zone d'image de référence p'1.

Selon une troisième variante, le module CAL sélectionne, parmi les deux partitions de référence r'3 et r'4, celle dont le bord en commun avec la zone d'image de référence p'1 est le plus long. Dans l'exemple représenté, il s'agit de la partition de référence r'3. Le module CAL calcule ensuite le vecteur mouvement prédit MVp1 comme étant égal au vecteur mouvement de référence MVr'3 correspondant à la partition de référence sélectionnée r'3.

Dans l'exemple représenté à la **figure 7A,** MVp1=MVr'3.

La quatrième méthode et ses trois variantes qui viennent d'être décrites ci-dessus peuvent être appliquées à la prédiction spatiale d'un vecteur mouvement MVp1 tel que représenté à la **figure 7B.** Dans l'exemple représenté, compte tenu du fait que la partition courante P1 a une forme géométrique différente de celle des partitions de référence avoisinantes pr1 à pr5, le module CAL détermine le bord le plus long de la partition courante P1. Un tel bord est noté bdl1 sur la **figure 7B.** Le module CAL sélectionne ensuite, parmi les partitions de référence voisines pr1 à pr5, les partitions de référence ayant le bord bdl1 en commun. Dans l'exemple représenté, il s'agit des partitions de référence pr3 et pr4.

Selon les trois variantes précitées, le module CAL:

- calcule le vecteur mouvement prédit MVp1 comme étant égal à la moyenne des vecteurs mouvement de référence MVr3 et MVr4 qui sont associés respectivement aux partitions de référence sélectionnées pr3 et pr4,
- pondère ladite moyenne calculée par la longueur du bord de la partition de référence pr3 qui est en commun avec la partition courante P1 et par la longueur du bord de la partition de référence pr4 qui est en commun avec la partition courante P1,
- calcule le vecteur mouvement prédit MVp1 comme étant égal au vecteur mouvement de référence MVr3 correspondant à la partition de référence pr3 qui a le plus long bord en commun avec la partition courante P1.

Une cinquième méthode de prédiction de vecteur mouvement va maintenant être décrite en référence à la **figure 8A.** Dans l'exemple représenté, le macrobloc $MB_N$ est découpé en par exemple deux partitions égales P1 et P2 de forme rectangulaire. L'image de référence $I_{N-1}$ est quant à elle découpée selon n partitions de référence r'1, r'2,..., r'n.

Selon la cinquième méthode de prédiction du vecteur mouvement telle que représentée à la **figure 8A,** dans le cas d'une prédiction de type temporelle, compte tenu du fait que la zone d'image de référence p'1 pointée par le vecteur mouvement MVp1 a une forme géométrique différente de celle des partitions de référence avoisinantes r'1 à r'5 et que par ailleurs, elle contient un motif d'une couleur particulière tel que par exemple un cercle noir C'1, le module CAL calcule la luminance moyenne de la zone d'image de référence p'1 et de chacune des partitions de référence voisines r'1 à r'5. Ce dernier sélectionne alors, parmi les partitions de référence voisines r'1 à r'5, celle dont la luminance moyenne calculée est la plus proche de celle de la zone d'image de référence p'1. Dans l'exemple représenté, il s'agit de la partition de référence r'2 qui comporte un motif C'2 semblable à celui de la zone d'image de référence p'1. Le module CAL calcule ensuite le vecteur mouvement prédit MVp1 comme étant égal au vecteur mouvement de référence MVr'2 correspondant à la partition de référence sélectionnée r'2.

La cinquième méthode qui vient d'être décrite ci-dessus peut être appliquée à la prédiction spatiale d'un vecteur mouvement MVp1 tel que représenté à la **figure 8B.** Dans l'exemple représenté, compte tenu du fait que la partition courante P1 a une forme géométrique différente de celle des partitions de référence pr1 à pr5 avoisinantes et que par ailleurs, elle contient un motif d'une couleur particulière tel que par exemple un cercle noir C1, le module CAL calcule la luminance moyenne de la partition courante P1 et de chacune des partitions de référence voisines pr1 à pr5. Ce dernier sélectionne alors, parmi les partitions de référence voisines pr1 à pr5, celle dont la luminance moyenne calculée est la plus proche de celle de la partition courante P1. Dans l'exemple représenté, il s'agit de la partition de référence pr2 qui comporte un motif Cr2 semblable à celui de la partition courante P1. Le module CAL calcule ensuite le vecteur mouvement prédit MVp1 comme étant égal au vecteur mouvement de référence MVr2 correspondant à la partition de référence sélectionnée pr2.

A l'issue de l'étape de calcul C4 conformément à l'une ou l'autre des méthodes précitées selon l'invention, le module de calcul de prédiction PREDCO délivre alors un premier vecteur prédit MVp1 qui, dans le cas où celui-ci est retenu par le codeur CO comme étant le type de vecteur mouvement optimal, est immédiatement codé par le module de transformée et de quantification TQCO, puis décodé par le module TQICO de transformée et de quantification inverse, lesquels sont représentés à la **figure 3.**

L'étape C4 précitée est ensuite réitérée de façon à prédire les autres vecteurs mouvement MVp2 à MVpp qui sont associés respectivement aux partitions P2 à Pp du macrobloc courant MB$_N$.

Une fois différentes prédictions possibles calculées par le module de calcul de prédiction PREDCO, au cours d'une étape C5 représentée à la **figure 2,** un module de décision DCNCO, représenté à la **figure 3,** parcourt les macroblocs partitionnés de l'image I$_N$ et choisit, dans cette étape C5, le mode de prédiction utilisé pour coder chacun de ces macroblocs. Parmi les prédictions possibles pour un macrobloc, le module de décision DCNCO choisit la prédiction optimale selon un critère débit distorsion bien connu de l'homme du métier.

En référence à la **figure 2,** chaque macrobloc prédit est codé, au cours d'une étape C6, comme dans la norme H.264/MPEG-4 AVC.

En référence à la **figure 3,** une fois ce codage structurel effectué par le module de décision DCNCO, les coefficients de résidus s'ils existent, correspondants aux blocs de l'image I$_N$, sont envoyés au module TQCO de transformée et de quantification, pour subir des transformées en cosinus discrètes puis une quantification. Les tranches de macroblocs avec ces coefficients quantifiés sont ensuite transmises à un module CE de codage entropique représenté, pour produire, avec les autres images de la séquence vidéo déjà codées de la même façon que l'image I$_N$, un flux vidéo F, binaire, codé selon l'invention.

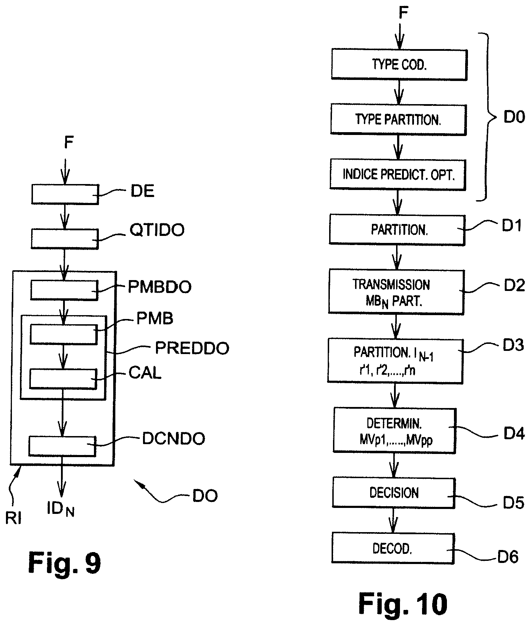

Le flux binaire F ainsi codé est transmis par un réseau de communication, à un terminal distant. Celui-ci comporte un décodeur DO selon l'invention, représenté à la **figure 9.**

Le flux binaire F est d'abord envoyé à un module DE de décodage entropique, décodage inverse de celui effectué par le module de codage entropique CE représenté à **la figure 3.** Puis, pour chaque macrobloc d'image à reconstruire, les coefficients décodés par le module DE sont envoyés à un module QTIDO de quantification inverse et de transformée inverse.

Un module RI de reconstruction d'image reçoit alors des données décodées correspondant aux données produites par le module DCNCO **(figure 3)** à l'étape C5 de codage selon l'invention, aux erreurs de transmission près. Le module RI met en œuvre des étapes D0 à D6 du procédé de décodage selon l'invention, telle que représentées à la **figure 10.** Un tel procédé de décodage selon l'invention est également implémenté de manière logicielle ou matérielle par modifications d'un décodeur initialement conforme à la norme H.264/MPEG-4 AVC.

La première étape D0 est le décodage de structures de données codées dans une tranche d'un macrobloc courant de l'image I$_N$ à décoder. De façon connue en soi, le module de reconstruction RI détermine à partir des données de ladite tranche de macrobloc:

- le type de codage desdites données, Intra ou Inter: Inter selon l'invention,
- le type de partitionnement du macrobloc à reconstruire, Inter 4x4, 8x8, ligne, etc...: Inter 4x4 dans le mode de réalisation décrit,
- l'indice du prédicteur optimal tel que sélectionné par le module de décision DCNCO à l'étape C5 précitée.

L'étape suivante D1 représentée à la **figure 10** est le découpage du macrobloc courant à décoder, conformément au partitionnement déterminé à l'étape D0. A cet effet, en référence à la **figure 9,** un module PMBDO de partitionnement de macroblocs, qui ressemble en tous points à celui représenté à la **figure 3,** découpe le macrobloc en une pluralité de p partitions, P1 à Pp.

Au cours d'une étape D2 représentée à la **figure 10,** le module de partitionnement PMBDO transmet le macrobloc courant à décoder, qui vient d'être partitionné, à un module de prédiction PREDDO représenté à la **figure 9,** qui est en tous points semblable au module de prédiction PREDCO du codeur CO de la **figure 3,** et qui, pour cette raison, ne sera pas décrit à nouveau en détail.

Au cours des étapes D3 et D4 représentées à la **figure 10,** le module de prédiction PREDDO de la **figure 9** effectue le même algorithme que celui effectué par le module de prédiction PREDCO du codeur CO précité, de façon à obtenir un macrobloc courant dont les vecteurs mouvement associés ont été prédits conformément à l'une ou l'autre des cinq méthodes décrites ci-dessus.

Au cours d'une étape D5, un module de décision DCNDO choisit la prédiction optimale selon un critère débit distorsion bien connu de l'homme du métier.

Chaque macrobloc prédit est ensuite décodé, au cours d'une étape D6, comme dans la norme H.264/MPEG-AVC.

Une fois tous les macroblocs de l'image $I_N$ décodés, en référence à la **figure 9,** le module RI de reconstruction d'image fournit en sortie du décodeur DO, une image $ID_N$ correspondant au décodage de l'image $I_N$.

Compte tenu du fait que l'algorithme de prédiction effectué au décodeur DO est en tous point le même que celui effectué au codeur CO, le coût de l'information induit par les prédicteurs utilisés s'en trouve fortement réduit.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

**Revendications**

1. Procédé de prédiction spatiale ou temporelle d'un vecteur mouvement d'une partition courante d'une image courante ($I_N$), à partir d'une pluralité de n vecteurs mouvement de référence associés respectivement à n partitions de référence qui ont été préalablement codées puis décodées,
   ledit procédé étant **caractérisé en ce que** dans le cas où la forme géométrique/taille de ladite partition courante ou d'une zone d'image de référence correspondant à la partition courante est différente de celle de k partitions de référence voisines, avec k≤n, le vecteur mouvement de la partition courante est déterminé en fonction d'au moins un vecteur mouvement de référence qui appartient à un ensemble de k vecteurs mouvement de référence associés respectivement aux k partitions de référence voisines, et **en ce que** la détermination du vecteur mouvement de la partition courante comprend les étapes de :

   - dilatation spatiale d'au moins un pixel de la partition courante ou de la zone d'image de référence,
   - sélection, parmi l'ensemble desdites k partitions de référence voisines, d'un sous-ensemble de $k_c$ partitions de référence qui chevauchent la partition courante dilatée ou la zone d'image de référence dilatée,
   - calcul de la moyenne des $k_c$ vecteurs mouvement de référence correspondant respectivement aux $k_c$ partitions de référence sélectionnées.

2. Procédé de prédiction selon la revendication 1, dans lequel la moyenne des $k_c$ vecteurs mouvement de référence est pondérée par le nombre de pixels commun entre la partition courante dilatée ou la zone d'image de référence dilatée et chacune des partitions de référence chevauchant ladite partition courante dilatée ou ladite zone d'image de référence dilatée.

3. Procédé de codage d'une image ou d'une séquence d'images générant un flux (F) de données comportant des données représentatives d'au moins une partition d'image, ledit procédé comprenant une étape de prédiction spatiale ou temporelle d'un vecteur mouvement de ladite partition d'image,
   ledit procédé étant **caractérisé en ce que** ladite prédiction spatiale ou temporelle est effectuée conformément au procédé selon la revendication 1 ou la revendication 2.

4. Procédé de décodage d'un flux (F) de données représentatif d'une image ou d'une séquence d'images, ledit flux comportant des données représentatives d'au moins une partition d'image, ledit procédé comprenant une étape de prédiction spatiale ou temporelle d'un vecteur mouvement de ladite partition d'image,
   ledit procédé étant **caractérisé en ce que** ladite prédiction spatiale ou temporelle est effectuée conformément au procédé selon la revendication 1 ou la revendication 2.

5. Dispositif de prédiction spatiale ou temporelle d'un vecteur mouvement d'une partition courante d'une image courante ($I_N$), à partir d'une pluralité de n vecteurs mouvement de référence associés respectivement à n partitions de référence qui ont été préalablement codées puis décodées,
   le dispositif de prédiction étant **caractérisé en ce que** dans le cas où la forme géométrique/taille de ladite partition courante ou d'une zone d'image de référence correspondant à la partition courante est différente de celle de k partitions de référence voisines, avec k≤n, le dispositif de prédiction comprend un module de calcul apte à déterminer le vecteur mouvement de la partition courante en fonction d'au moins un vecteur mouvement de référence qui appartient à un ensemble de k vecteurs mouvement de référence associés respectivement aux k partitions de référence voisines, la détermination du vecteur mouvement de la partition courante comprenant ce qui suit :

- dilatation spatiale d'au moins un pixel de la partition courante ou de la zone d'image de référence,
- sélection, parmi l'ensemble desdites k partitions de référence voisines, d'un sous-ensemble de $k_c$ partitions de référence qui chevauchent la partition courante dilatée ou la zone d'image de référence dilatée,
- calcul de la moyenne des $k_c$ vecteurs mouvement de référence correspondant respectivement aux $k_c$ partitions de référence sélectionnées.

6. Dispositif de codage (CO) d'une image ou d'une séquence d'images générant un flux (F) de données comportant des données représentatives d'au moins une partition d'image, ledit dispositif comprenant des moyens de prédiction spatiale ou temporelle d'un vecteur mouvement de ladite partition d'image,
**caractérisé en ce que** lesdits moyens de prédiction sont contenus dans un dispositif de prédiction conforme au dispositif selon la revendication 5.

7. Dispositif (DO) de décodage d'un flux (F) de données représentatif d'une image ou d'une séquence d'images, ledit flux (F) comportant des données représentatives d'au moins une partition d'image, ledit dispositif comprenant des moyens de prédiction spatiale ou temporelle d'un vecteur mouvement de ladite partition d'image,
**caractérisé en ce que** lesdits moyens de prédiction sont contenus dans un dispositif de prédiction conforme au dispositif selon la revendication 5.

8. Programme d'ordinateur comportant des instructions pour mettre en œuvre l'un des procédés selon l'une quelconque des revendications 1 à 4, lorsqu'il est exécuté sur un ordinateur.

## Fig. 1A

ART ANTERIEUR

**Fig. 1A**

## Fig. 1B

ART ANTERIEUR

**Fig. 1B**

## Fig. 1C

ART ANTERIEUR

**Fig. 1C**

BR2    BR3    r'2    r'3    BR4

r'1

r'5

BR1

r'4

N

MVp1

MBC$_N$

P1

ART ANTERIEUR

**Fig. 1D**

MB$_N$

| TYPE PARTITION. | C0 |

| PARTITION. MB$_N$ P1,....,Pp | C1 |

| TRANSMISSION MB$_N$ PART. | C2 |

| PARTITION. I$_{N-1}$ r'1, r'2,...r'n | C3 |

| DETERMIN. MVp1,.....,MVpp | C4 |

| DECISION | C5 |

| COD. | C6 |

**Fig. 2**

**Fig. 3**

**Fig. 4A**

**Fig. 4B**

**Fig. 5A**

**Fig. 5B**

**Fig. 6A**

**Fig. 6B**

**Fig. 7A**

**Fig. 7B**

**Fig. 8A**

**Fig. 8B**

**Fig. 9**

**Fig. 10**

Europäisches
Patentamt

European
Patent Office

Office européen
des brevets

# RAPPORT DE RECHERCHE EUROPEENNE

Numéro de la demande

EP 19 21 5772

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2004/141555 A1 (RAULT PATRICK M [CA] ET AL) 22 juillet 2004 (2004-07-22) | 1,3-8 | INV. H04N19/52 H04N19/593 |
| Y | * alinéas [0012] - [0018] * <br> * figure 2 * | 2 | |
| Y | GOEL S ET AL: "Adaptive search window size algorithm for fast motion estimation in H.264/AVC standard", CIRCUITS AND SYSTEMS, 2005. 48TH MIDWEST SYMPOSIUM ON CINICINNATI, OHIO AUGUST 7-10, 2005, PISCATAWAY, US, 7 août 2005 (2005-08-07), pages 1557-1560, XP010893879, DOI: 10.1109/MWSCAS.2005.1594412 ISBN: 978-0-7803-9197-0 * Sections III.A and III.B * | 2 | |
| A | US 2008/159401 A1 (LEE ET AL) 3 juillet 2008 (2008-07-03) * figures 2,6,7 * * alinéas [0003], [0008] - [0016], [0020] - [0022], [0044] - [0048], [0072], [0073] * | 1-8 | |
| A | US 2008/247465 A1 (XIN ET AL) 9 octobre 2008 (2008-10-09) * figures 3-7 * * alinéas [0020] - [0033], [0039], [0040] * | 1-8 | |
| A | GURUPRASAD V PAWSE: "Next Generation Digital Video Compression Technology H.264/MPEG-4 Part 10 AVC Baseline Decoder", WHITE PAPER, GLOBAL EDGE SOFTWARE LTD., janvier 2008 (2008-01), XP002561948, * pages 9-10, sections 4.3.2 to 4.3.4 and figure 8 * | 1-8 | |

DOMAINES TECHNIQUES RECHERCHES (IPC)

H04N

Le présent rapport a été établi pour toutes les revendications

| Lieu de la recherche | Date d'achèvement de la recherche | Examinateur |
|---|---|---|
| Berlin | 23 mars 2020 | Santos Luque, Rocio |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

EP 3 651 466 A1

## ANNEXE AU RAPPORT DE RECHERCHE EUROPEENNE
## RELATIF A LA DEMANDE DE BREVET EUROPEEN NO.

EP 19 21 5772

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-03-2020

| Document brevet cité au rapport de recherche | Date de publication | Membre(s) de la famille de brevet(s) | | Date de publication |
|---|---|---|---|---|
| US 2004141555 A1 | 22-07-2004 | CN | 1739297 A | 22-02-2006 |
| | | EP | 1584196 A1 | 12-10-2005 |
| | | JP | 2006517363 A | 20-07-2006 |
| | | US | 2004141555 A1 | 22-07-2004 |
| | | WO | 2004064401 A1 | 29-07-2004 |
| US 2008159401 A1 | 03-07-2008 | CN | 101573984 A | 04-11-2009 |
| | | CN | 102752593 A | 24-10-2012 |
| | | CN | 103079069 A | 01-05-2013 |
| | | CN | 103079070 A | 01-05-2013 |
| | | CN | 103079071 A | 01-05-2013 |
| | | CN | 103096080 A | 08-05-2013 |
| | | EP | 2103141 A1 | 23-09-2009 |
| | | EP | 2595388 A1 | 22-05-2013 |
| | | EP | 2595389 A1 | 22-05-2013 |
| | | EP | 2595390 A1 | 22-05-2013 |
| | | EP | 2595391 A1 | 22-05-2013 |
| | | EP | 2595392 A1 | 22-05-2013 |
| | | JP | 5373626 B2 | 18-12-2013 |
| | | JP | 2010515399 A | 06-05-2010 |
| | | JP | 2014014166 A | 23-01-2014 |
| | | JP | 2014014167 A | 23-01-2014 |
| | | JP | 2014014168 A | 23-01-2014 |
| | | JP | 2014014169 A | 23-01-2014 |
| | | JP | 2014014170 A | 23-01-2014 |
| | | JP | 2015119502 A | 25-06-2015 |
| | | KR | 20080064072 A | 08-07-2008 |
| | | KR | 20130114045 A | 16-10-2013 |
| | | KR | 20130115185 A | 21-10-2013 |
| | | KR | 20130115186 A | 21-10-2013 |
| | | KR | 20130119395 A | 31-10-2013 |
| | | KR | 20130119396 A | 31-10-2013 |
| | | KR | 20140106473 A | 03-09-2014 |
| | | US | 2008159401 A1 | 03-07-2008 |
| | | US | 2013136186 A1 | 30-05-2013 |
| | | US | 2013142263 A1 | 06-06-2013 |
| | | US | 2013142264 A1 | 06-06-2013 |
| | | US | 2013142265 A1 | 06-06-2013 |
| | | US | 2013148736 A1 | 13-06-2013 |
| | | US | 2015319454 A1 | 05-11-2015 |
| | | US | 2015319455 A1 | 05-11-2015 |
| | | WO | 2008082158 A1 | 10-07-2008 |
| US 2008247465 A1 | 09-10-2008 | JP | 2008259174 A | 23-10-2008 |
| | | US | 2008247465 A1 | 09-10-2008 |

EPO FORM P0460

Pour tout renseignement concernant cette annexe : voir Journal Officiel de l'Office européen des brevets, No.12/82

23

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **G LAROCHE ; J. JUNG ; B. PESQUET-POPESCU.** *IEEE Transactions on Circuits and System for Vidéo Technology,* Septembre 2008, vol. 18, 1247-1257

- **G.J. SULLIVAN ; T.WIEGAND.** Rate-distortion optimization for video compression. *IEEE Signal Proc. Mag.,* 1998, 74-90